# EUROPÄISCHE PATENTSCHRIFT

(11) **EP 2 550 854 B1**
(45) Veröffentlichungstag und Bekanntmachung des Hinweises auf die Patenterteilung: **23.03.2016**
(21) Anmeldenummer: 12175313.1
(22) Anmeldetag: 06.07.2012
(51) Int. Cl.: A01F 15/08

(54) **Rundballenpresse**
Round baler
Presse à balles rondes

(30) Priorität: 27.07.2011 DE 102011079940
(43) Veröffentlichungstag der Anmeldung: 30.01.2013
(73) Patentinhaber: Deere & Company, Moline, IL 61265 (US)
(72) Erfinder: Gresset, Pascal, 25480 Pirey (FR); Zabe, Mickael, 70180 Roche et Raucourt (FR); Chapon, Emmanuel, 70100 Velet (FR)
(74) Vertreter: Reichert, Christian

(56) Entgegenhaltungen:
- EP-A1- 1 731 023
- EP-A1- 1 889 534
- US-A1- 2005 188 862
- US-A1- 2005 257 513

## Beschreibung

Die Erfindung betrifft eine Rundballenpresse mit einem Rahmen, einem am Rahmen ausgebildeten Pressraum zur Bildung eines Rundballens, einem zwischen dem Pressraum und einer Bodenfläche ausgebildeten Entladebereich und wenigstens einem im Entladebereich angeordneten Ablageelement, welches sich parallel zur Rotationsachse des Rundballens erstreckt und zum Abstützen des Rundballens während eines Entladevorgangs dient, wobei das Ablageelement als Flachprofil ausgebildet und mit einer elastischen Schicht versehen ist.

Beim Entladen eines Rundballens aus dem Pressraum einer Rundballenpresse stellt sich jeweils das Problem der Kontrolle über dessen Bewegung. Insbesondere stellt sich dieses Problem bei Rundballen dar, die mit einem Netz oder Garn umwickelt sind und einem hochdynamischen Entladevorgang bzw. Entladeprozess unterliegen. Beim Entladevorgang wird der Rundballen in der Regel aus dem Pressraum gelöst und fällt beispielsweise auf eine Entladerampe, die mit Ablageelementen versehen ist, welche den Rundballen in eine kontrollierte Abrollbewegung überführen. Je nach Ausgestaltung und Anordnung des Entladebereichs erfährt der Rundballen eine oftmals extreme Richtungsänderung in seiner Bewegung, insbesondere bei hochdynamischen, schnellen Entladevorgängen, wie sie bei leistungsstarken, moderneren Rundballenpressen stattfinden. Eine derartige Rundballenpresse ist beispielsweise in der DE 10 2005 036 181 A1 offenbart. Die mit einer solchen extremen Richtungsänderungen für den Rundballen behafteten Entladevorgänge führen zu extremen Belastungen am Rundballen die oftmals zu Schäden am Rundballen, insbesondere zu Rissen im Netz oder im Garn führen, wenn der Rundballen auf die genannten Ablageelemente fällt und von einer nahezu senkrechten Entladebewegung in eine horizontale Entladebewegung bzw. Abrollbewegung überführt werden soll.

Um derartigen Schadensfällen entgegenzuwirken ist es beispielsweise von Rundballenpressen der Fa. WELGER bekannt, ein an einer Entladerampe ausgebildetes Stüzelement als Rolle auszubilden, die mittels Federn am Rahmen bzw. an einer Entladerampe gelagert ist, um einen Teil der Bewegungsenergie des Rundballens zu absorbieren. Eine derartige Ausbildung einer auf Federn gelagerten Rolle gestaltet sich jedoch als konstruktiv aufwändig, wartungsintensiv und anfällig.

Ferner wird in der EP 1 889 534 A1 eine Rundballenpresse offenbart, die ein Ablageelement in Form eines als Entladerampe ausgebildeten Abrollriemens aufweist. Die vorgeschlagene Entladerampe ermöglicht ein gefedertes Abfangen eines Rundballens beim Entladen, stellt sich jedoch insgesamt als konstruktiv aufwändig und in Hinsicht auf die Federungseigenschaften als verbesserungswürdig dar.

Die der Erfindung zugrunde liegende Aufgabe wird darin gesehen, eine Rundballenpresse der eingangs genannten Art anzugeben, durch welches die vorgenannten Probleme überwunden werden.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß wird eine Rundballenpresse der eingangs genannten Art derart ausgebildet, dass die elastische Schicht wenigstens teilweise von einer Abdeckung umgeben ist. Durch das Flachprofil, welches als Platte, Blech oder desgleichen ausgebildet sein kann, wird eine plane Kontaktstelle für den Ballen geschaffen, die gegenüber einer gebogenen bzw. runden Kontaktfläche einen größeren Kontaktbereich für den Rundballen bietet, wodurch die Flächenpressung und damit auch die dynamische Belastung am Rundballen derart reduziert werden kann, dass die oben genannten Schadensbilder am Rundballen ausbleiben. Der Rundballen wird damit in seiner Bewegung beim Entladevorgang mit einer gegenüber einer Rolle größeren Auflagefläche aufgenommen, so dass eine durch das Ablageelement verursachte mechanische Beanspruchung der äußeren Hülle bzw. der Randschicht des Rundballens reduziert wird. Das Ablageelement kann als Teil einer am Rahmen der Rundballenpresse angelenkten Entladerampe ausgebildet oder direkt am Rahmen selbst befestigt sein. Das Ablageelement ist dabei im Entladebereich unterhalb des Pressraums angeordnet, so dass der Rundballen beim Entladen auf das Ablageelement fällt. Der Entladebereich beschreibt den gesamten Bereich, der beim Verlassen des Pressraums von dem Rundballen durchlaufen wird. Dazu gehören insbesondere eine Entladeöffnung, die den Pressraum öffnet und durch die der Ballen geführt wird, der Bereich in dem eine Entladerampe angeordnet ist, über welche der Rundballen auf die Bodenoberfläche geleitet wird sowie ein Bereich dazwischen, durch den der Rundballen entweder geführt wird oder sich aufgrund seiner Schwerkraft oder seines Bewegungsimpulses bewegt. Damit der Rundballen beim Entladevorgang aus einer nahezu senkrechten Bewegung in eine horizontale Bewegung überführt wird, kann das Ablageelement derart angeordnet sein, dass der auf das Ablageelement fallende Rundballen mit seiner Rotationsachse in Vorwärtsfahrtrichtung hinter dem Ablageelement liegt, so dass durch das Ablageelement ein auf den Rundballen gerichteter und entgegen der Vorwärtsfahrtrichtung wirkender Drehimpuls (Bewegungsimpuls) für den Rundballen generiert wird. Das Ablageelement kann jedoch auch mittig zur Rotationsachse oder derart angeordnet sein, dass der Rundballen mit seiner Rotationsachse in Vorwärtsfahrtrichtung vor dem Ablageelement liegt. Die Drehimpulsgebung kann dann beispielsweise durch zusätzliche Mittel erzwungen werden. Das Flachprofil ist zudem mit einer elastischen Schicht versehen, welche unter Einwirkung des Rundballens beim Entladevorgang elastisch verformbar ist. Dadurch, dass der Rundballen beim Entladevorgang direkt oder indirekt auf eine elastische Schicht einwirkt, kann ein Teil der Bewegungsenergie kompensiert und die Belastung am Rundballen erheblich reduziert werden, so dass die oben genannten Schadensbilder am Rundballen ausbleiben. Der Rundballen wird damit in seiner Bewegung beim Entladevorgang abgefedert und eine durch das Ablageelement verursachte mechanische Beanspruchung einer äußeren Hülle bzw. einer Randschicht des Rundballens reduziert. Die elastische Schicht ist zudem wenigstens teilweise von einer Abdeckung umgeben.

Dies kann in Form einer Ummantelung oder Beschichtung erfolgen. Die Abdeckung bzw. Ummantelung oder Beschichtung dient zum Schutz der elastischen Schicht und kann beispielsweise als Abdeckplatte oder aus einem anderen das Ablageelement wenigstens teilweise abdeckenden bzw. umgebenden Körper ausgebildet sein. Auch eine entsprechend widerstandsfähige bzw. stabile Folie ist einsetzbar.

Das Ablageelement kann sich wenigstens über einen Teil der Breite des Rundballens, vorzugsweise über die gesamte Breite des Rundballens erstrecken, wobei auch partielle, über die Breite verteilte Abschnitte angeordnet sein können, so dass der Rundballen über seine Breite abschnittsweise abgestützt wird.

Das Flachprofil kann elastisch verformbar ausgebildet sein, so dass es sich unter Einwirkung des Rundballens beim Entladevorgang elastisch verformen kann. Das Flachprofil kann dazu als Metallblech oder auch als Kunststoffplatte ausgebildet sein. Andere Materialien mit gleichen oder ähnlichen elastischen Eigenschaften sind ebenfalls einsetzbar.

Das Ablageelement kann zudem oder alternativ schwenkbar aufgehängt sein, so dass eine Schwenkbewegung unter Einwirkung des Rundballens beim Entladevorgang eingeleitet wird, wobei das Ablageelement mit die Schwenkbewegung abfedernden Mitteln verbunden ist. Die abfedernden Mittel können beispielsweise als mechanische (Spiralfedern, Schraubenfedern, Blattfedern etc.), hydraulische (Hydraulikzylinder etc.) oder auch pneumatische (Pneumatikzylinder etc.) Federelemente, oder auch als elastische Puffer bzw. Dämpfer, beispielsweise aus Gummi oder Kautschuk, ausgebildet sein.

Die elastische Schicht kann aus einem Schaumstoff, einem Elastomer oder einem anderen elastischen Material gebildet werden. Einsetzbar sind dabei Schaumstoffe bzw. Schäume oder gummi- bzw. kautschukhaltige Materialien, die unter dem Gewicht des Rundballens eine entsprechende Elastizität aufweisen und sich unter Einfluss der kinetischen Energie des Rundballens verformen können. Auch andere Materialien mit gleichen oder ähnlichen elastischen Eigenschaften sind dabei einsetzbar.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine schematische Seitenansicht einer erfindungsgemäßen Rundballenpresse in einer geschlossenen Stellung mit einer ersten Ausführungsform einer im Entladebereich ausgebildeten Entladerampe mit Ablageelement,
- Fig. 2: eine schematische perspektivische Seitenansicht der Entladerampe aus Figur 1 mit einer ersten Ausführungsform für das Ablageelement,
- Fig. 3: eine schematische perspektivische Seitenansicht der Entladerampe aus Figur 1 mit einer zweiten Ausführungsform für das Ablageelement und
- Fig. 4: eine schematische perspektivische Seitenansicht der Entladerampe aus Figur 1 mit einer dritten Ausführungsform für das Ablageelement.

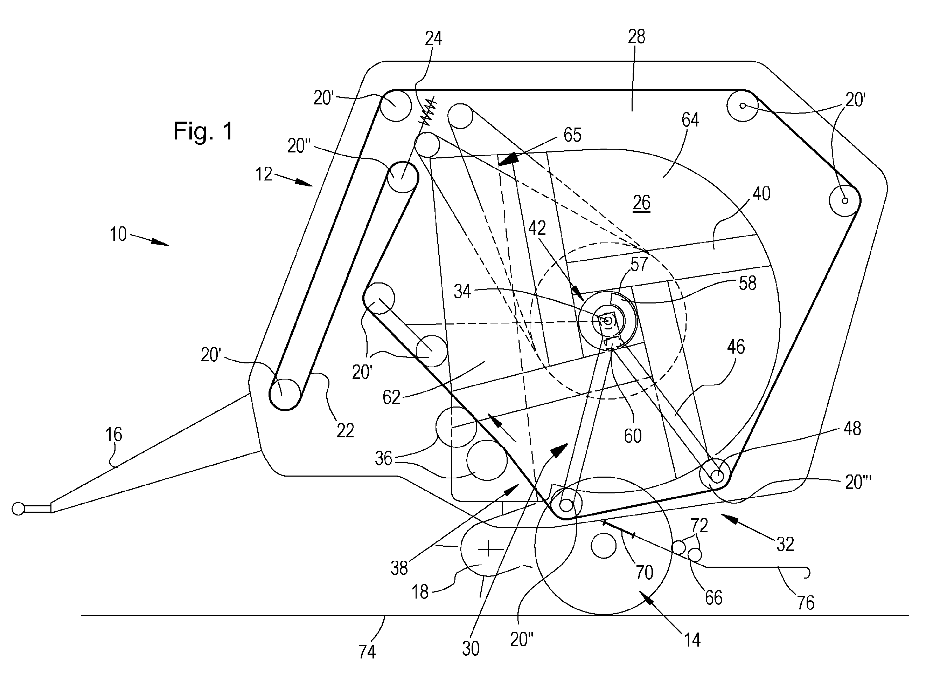

Eine in Figur 1 gezeigte Rundballenpresse 10 enthält einen Rahmen 12, ein Fahrgestell 14, eine Deichsel 16, eine Aufnahmevorrichtung 18, Rollen 20 (20', 20", 20'"), Presselemente 22, eine Spannvorrichtung 24, Seitenwände 26, einen durch die Seitenwände 26 und die Presselemente 22 begrenzten Pressraum 28, Schwenkteile 30 sowie einen Entladebereich 32.

Die Rundballenpresse 10 ist in dem dargestellten Ausführungsbeispiel mit einem durch bewegliche Presselemente 22 in der Größe veränderbaren Pressraum 28 versehen, kann aber auch mit einem größenunveränderlichen Pressraum 28 mit ortsfesten Presselementen versehen werden. In dem Pressraum 28 wird vom Boden aufgenommenes Erntegut zu einem sogenannten Rundballen geformt, der mit seinen Stirnseiten auf die Seitenwände 26 drückt.

Der Rahmen 12 stellt sich als ein Schweiß- und/oder Schraubzusammenbau dar, an dem alle Komponenten der Rundballenpresse 10 befestigt sind, der sich auf dem Fahrgestell 14 abstützt und der mit der Deichsel 16 an ein nicht gezeigtes Zugfahrzeug anschließbar ist. Der Rahmen 12 trägt unter anderem nicht dargestellte Verkleidungsteile, einige der Rollen 20, die Seitenwände 26 und die Schwenkteile 30. Der Rahmen 12 umschließt den von den Seitenwänden 26 und den Presselementen 22 umgebenen Bereich weiträumig.

Das Fahrgestell 14 besteht in nicht näher bezeichneter Weise aus einer Achse und Rädern, auf denen der Rahmen 12 ruht.

Die Deichsel 16 greift an der Vorderseite des Rahmens 12 starr oder höhenverstellbar an.

Die Aufnahmevorrichtung 18 ist in üblicher Weise als eine sogenannte Pick-Up ausgebildet und an den Rahmen 12 höhenverstellbar angeschlossen. Der Aufnahmevorrichtung 18 kann eine ebenfalls an sich bekannte Schneidvorrichtung nachgeordnet werden. Die Aufnahmevorrichtung 18 nimmt auf dem Boden abgelegtes Gut auf und gibt es über eine gegebenenfalls vorhandene Schneidvorrichtung in den Pressraum 28 weiter, wo es zu einem zylindrischen Rundballen geformt wird.

Einige der Rollen 20 sind ortsfest in dem Rahmen 12 drehbar gelagert und werden mit 20' bezeichnet, eine andere der Rollen 20 ist gegen die Kraft einer nicht näher bezeichneten Feder verstellbar, damit die Presselemente 22 dem wachsenden Ballendurchmesser nachgeben können, und ist mit 20" bezeichnet; wieder andere Rollen 20 sind auf Schwenkteilen 30 um eine Schwenkachse 34 schwenkbar. Diese Rollen 20 werden mit 20'" gekennzeichnet und sind derart breit ausgebildet und verlaufen zueinander parallel, dass die Presselemente 22 darüber ablaufen und den Pressraum 28 umschließen können. Neben den Rollen 20 sind auch Walzen 36 vorgesehen, die sich oberhalb einer Eingangsöffnung 38 in den Pressraum 28 befinden. Die Walzen 36 dienen als sogenannte Starterrollen beim Ballenbildungsbeginn, auf denen sich ein Teil des Gewichts des Rundballens abstützen kann.

Die Presselemente 22 sind als parallel zueinander verlaufende Riemen ausgebildet, die den Pressraum 28 auf seiner Breite im Wesentlichen bedecken. Statt der Ausbildung als Riemen könnte auch eine als Stabkettenförderer oder als breites Band gewählt werden, wie dies ebenfalls bekannt ist. In diesem Fall wäre also nur ein Presselement vorhanden, was aber ebenfalls unter den Schutzbereich fallen soll. Die Presselemente 22 sind endlos und werden dadurch in Umlaufbewegung versetzt, dass sie reibschlüssig oder formschlüssig auf wenigstens einer antreibbaren Rolle 20 aufliegen. Die Presselemente 22 bilden im Bereich der Eingangsöffnung 38 eine Brücke, die sich mit zunehmendem Erntegut zu einer nach innen ausweitenden Schlaufe formt und den Rundballen umgibt. Die Presselemente 22 werden dadurch unter Spannung gehalten, dass sie über die lageveränderliche Rolle 20" geführt werden.

Die Spannvorrichtung 24 wird in bekannter Weise dadurch gebildet, dass die Rolle 20" auf einem nicht dargestellten Arm, Schlitten oder dergleichen gegen die Kraft einer Feder geführt ist und stets eine Schlaufe der Presselemente 22 gespannt hält.

Die Seitenwände 26 nehmen im Wesentlichen in einer Sicht auf Figur 1 die Form eines "D" ein, wobei der rückwärtige und in Figur 1 rechte Endbereich einen Bogen bildet, der im Wesentlichen der Umfangslinie des fertigen Rundballens folgt, d.h. einem Teil eines runden Kreisbogens. Die Seitenwände 26 sind grundsätzlich zweistückig ausgebildet und enthalten einen vorderen und einen rückwärtigen Abschnitt 62 und 64, die schwenkbar miteinander verbunden sind. Jeder Abschnitt 62, 64 kann aber durchaus aus mehreren Teilen zusammengesetzt werden. Die Seitenwände 26 nehmen einen Abstand zu dem Rahmen 12 ein können somit nach außen ausgelenkt werden, wie dies nachfolgend beschrieben wird. Die rückwärtigen Abschnitte 64 der Seitenwände 26 sind mittels Versteifungsstreben 40 biegesteif ausgebildet, wobei die Versteifungsstreben 40 aufgeschraubt oder aufgeschweißt werden können. Gemäß der Darstellung in Figur 1 verlaufen die Versteifungsstreben 40 nahezu sternförmig mit Bezug auf die Schwenkachse 34 und verlaufen tangential an dieser mit geringem Abstand vorbei, um schließlich mehr oder weniger senkrecht aufeinander zu stoßen. Aufgrund dieses Verlaufs schließen sie eine in diesem Ausführungsbeispiel viereckige Kammer 42 ein.

In ihrem vorderen Endbereich sind die rückwärtigen Abschnitte 64 über ein (nicht dargestelltes) Gelenk und die vorderen Abschnitte 62 mit dem Rahmen 12 begrenzt schwenkbar verbunden. Der Anschluss des rückwärtigen Abschnitts 64 an den vorderen Abschnitt 62 erfolgt im Wesentlichen entlang einer mehr oder weniger vertikalen Linie mit einer Gelenkachse 65 im Bereich des vorderen Abschnitts 62, d.h. im Bereich des Pressraums 28. Im Bereich der Schwenkachse 34 ist jede Seitenwand 26 bzw. deren rückwärtiger Abschnitt 64 auf einer Achse geführt, die an dem Rahmen 12 starr befestigt ist und zugleich als Schwenkachse 34 für die Schwenkteile 30 dient.

Anders als in dem gezeigten Ausführungsbeispiel kann der Anschluss der Seitenwand 26 oder Seitenwände 26 auch entlang einer oberen mehr oder weniger waagrechten oder leicht schrägen Linie erfolgen, so dass sich eine nach unten öffnende Divergenz der Seitenwände 26 ergibt, wenn der Rundballen ausgeworfen wird.

Der Pressraum 28 ist in seiner Größe veränderlich und wird am Anfang, d.h. bei leerem Pressraum 28, von einem ungefähr dreieckigen zylindrischen Raum zwischen der Aufnahmevorrichtung 18 und dem Pressmittel 22 und seitlich von den Seitenwänden 26 begrenzt. Mit zunehmend zugeführtem Erntegut erweitert sich der Pressraum 28 und nimmt schließlich einen Querschnitt ein, der im rückwärtigen Bereich der Form der Seitenwände 26 folgt.

Die Schwenkteile 30 sind in diesem Ausführungsbeispiel auf jeder Seite mit einem oder mehreren radial zu der Schwenkachse 34 verlaufenden Arm(en) 46 und einer oder mehreren an dessen/deren radial außen liegenden Ende angebrachten quer dazu verlaufenden Traverse(n) 48 versehen. Am Ende der Arme 46 ist jeweils eine Rolle 20'" vorgesehen. Die Schwenkteile 30 sind mit dem radial innenliegenden Ende jedes Arms 46 schwenkbar auf der Achse 34 angeordnet. Die Stellung der Arme 46 wird mittels eines Antriebs (nicht gezeigt) gesteuert, der einen Motor und pro Schwenkteil 30 einen Schwenkantrieb enthält. Der Motor kann in seinen jeweiligen Stellungen gebremst werden und hält die Arme 46 entsprechend ortsfest. Die Steuerung der Schwenkteile 30 erfolgt derart, dass der vordere Schwenkteil 30 während der Ballenbildungsphase verstellt wird, um bei der Bildung eines Ballenkerns zu helfen, und dass der rückwärtige Schwenkteil 30 eine untere Lage einnimmt, während der Rundballen gebildet wird, und eine obere Lage, wenn er ausgeworfen wird. Die untere Endlage des Schwenkteils 30 ist Figur 1 dargestellt, wobei die obere Endlage eine Lage entsprechend einer Drehung des Schwenkteils entgegen den Uhrzeigersinn um ca. 90 bis 180 darstellt, derart, dass der Entladebereich 32 geöffnet wird und ein gepresster Ballen durch Verschwenken des Schwenkteils 30 freigegeben wird. Es wird darauf hingewiesen, dass der vordere Schwenkteil 30 nicht unbedingt erforderlich ist.

Eine Drückevorrichtung 57 enthält eine ansteigende Fläche 58 und ein Folgeglied 60 und dient dazu, zum und beim Auswerfen des Rundballens den Druck und damit die Reibung der Seitenwände 26 auf dessen Stirnflächen zu verringern, so dass der Rundballen leichter aus dem Pressraum 28 entladen werden kann.
Die ansteigende Fläche 58 ist auf einem zu der Schwenkachse 34 konzentrisch verlaufenden Kreisbogen gelegen und an der Außenseite beider Seitenwände 26 befestigt, wenn es auch ausreichend wäre, nur eine ansteigende Fläche, d. h. an einer Seitenwand 26 vorzusehen. In dem vorliegenden Ausführungsbeispiel ist die ansteigende Fläche 58 aus einem gebogenen Stahlkeil gebildet, der gleichmäßig ansteigend innerhalb der Kammer 42 auf die Seitenwände 26 aufgeschraubt ist.

Das Folgeglied 60 ist auf der der Längsmittenebene der Rundballenpresse 10 zugelegenen Seite des Arms 46 des rückwärtigen Schwenkteils 30 vorgesehen und als Gleitfläche ausgebildet. Zur Minimierung der Reibung werden die Reibflächen geschmiert; alternativ kann das Folgeglied 60 auch als Rad, Rolle, Kugel oder dergleichen drehendes Glied ausgebildet werden. Das Folgeglied 60 ist derart angeordnet, dass es bei einer Drehung des Schwenkteils 30 um die Schwenkachse 34 eine runde Kreisbahn beschreibt und sich auf der ansteigenden Fläche 58 bewegt. Vorzugsweise befindet sich das Folgeglied 60 stets in Anlage auf der ansteigenden Fläche 58.

Das Folgeglied 60 liegt auf der höchsten Erhebung der ansteigenden Fläche 58 auf, wenn sich die rückwärtigen Schwenkteile 30 in ihrer unteren Endstellung befinden - sh. Figur 1 - und der Rundballen erzeugt werden kann. Wenn die Schwenkteile 30 in ihre obere Endstellung gebracht werden, in der der Rundballen aus dem Pressraum 28 entlassen werden kann, wird das Folgeglied 60 zu der niedrigsten Stelle der ansteigenden Fläche 58 bewegt. Der Unterschied zwischen der höchsten und der niedrigsten Stelle kann z.B. circa 20 bis 50 mm betragen.

Sobald in dem Pressraum 28 ein Rundballen gebildet ist, wird der rückwärtige Schwenkteil 30 angehoben, worauf sich aufgrund des in dem Pressraum 28 herrschenden Drucks ausgehend von dem gepressten Erntegut die rückwärtigen Abschnitte 64 der Seitenwände 26 nach außen bewegen. Infolgedessen verringert sich die Reibung zwischen der Innenseite der Seitenwände 26 und den Stirnflächen des Rundballens und letzterer fällt aufgrund der Schwerkraft aus dem Pressraum 28. Sobald der Rundballen den Pressraum 28 verlassen hat und die Rundballenpresse 10 soweit weiterbewegt worden ist, dass der rückwärtige Schwenkteil 30 wieder abgesenkt werden kann, erfolgt eine Schwenkbewegung des rückwärtigen Schwenkteils 30 in der entgegensetzten Richtung, so dass das Folgeglied 60 zur größten Erhebung der ansteigenden Fläche 58 bewegt wird und dabei die rückwärtigen Abschnitte 64 der Seitenwände 26 nach innen drückt.

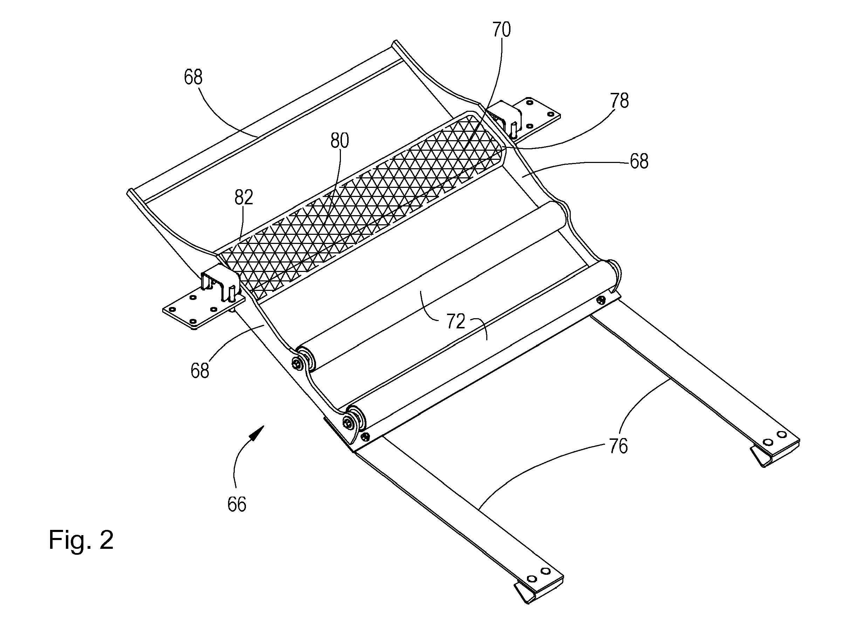

Der Entladebereich 32 umfasst eine Entladerampe 66, wie sie genauer in den Figuren 2 bis 4 dargestellt ist.

Die Entladerampe 66 umfasst einen Rampenrahmen 68 auf dem ein erstes, sich quer zur Rundballenpresse 10 erstreckendes Ablageelement 70, sowie weitere, sich quer zur Ballenpresse erstreckende und als Rollen ausgebildete Ablagelemente 72 befestigt sind. Der Rampenrahmen 68 ist mit einem sich in Längsrichtung der Rundballenpresse 10 erstreckenden Gefälle versehen und dient dazu einen ausgeworfenen Ballen kontrolliert auf eine Bodenoberfläche 74 zu führen, wobei das Gefälle zum hinteren Bereich (entgegen der Fahrtrichtung) der Rundballenpresse 10 abfällt. Am unteren Bereich der Entladerampe 66 sind Federstreben 76 angebracht, die sich, nachdem der Rundballen über die Ablagelemente 70, 72 geführt wurde, unter dem Gewicht des Rundballens elastisch verformen und den Rundballen auf die Bodenoberfläche 74 federnd ablegen.

Figur 2 zeigt eine erste Ausführungsform für das Ablageelement 70. Das Ablageelement 70 ist als Flachprofil 78 ausgebildet, vorzugsweise als Stahlplatte oder Stahlblech. Das Flachprofil 78 ist an beiden Enden am Rampenrahmen 68 gelagert bzw. befestigt. Das Ablageelement 70 ist so angeordnet, dass der Rundballen beim Entladevorgang auf das Flachprofil 78 fällt. Um einen herabfallenden Rundballen in Richtung der abfallenden Entladerampe 66 zu bewegen ist das Ablageelement 70 vorzugsweise in Fahrtrichtung vor der Rotationsachse des Rundballens angeordnet. Das Flachprofil 78 ist von einer elastischen Schicht 80 (in den Figuren schraffiert dargestellt) umgeben, welche vorzugsweise aus Schaumstoff besteht, jedoch auch aus einem anderen elastischen Material wie beispielsweise Gummi oder einem anderen Elastomer ausgebildet werden kann. Ferner ist zum Schutz der elastischen Schicht 80 eine Abdeckung 82 vorgesehen, die in dem in Figur 2 dargestellten Ausführungsbeispiel ebenfalls als Platte, vorzugsweise aus Kunststoff, ausgebildet ist und die elastische Schicht 80 bedeckt bzw. diese vollständig abdeckt. Alternativ ist als Abdeckung 82 auch eine entsprechend widerstandsfähige Folie einsetzbar, die auf bzw. um die elastische Schicht 80 geklebt bzw. gewickelt ist. Die Abdeckung 82 ist derart ausgebildet, dass sie den mechanischen Belastungen durch den Rundballen standhält und die elastische Schicht 80 vor Beschädigungen schützt. Die Abdeckung 82 ist als relativ stabile Kunststoffplatte auf der elastischen Schicht 80 bzw. auf dem Flachprofil 78 gelagert. Unter Einwirkung des Gewichts des Rundballens wird die Abdeckung 82 bzw. die Kunststoffplatte nach unten gedrückt, so dass die elastische Schicht 80 durch die Unterseite der Abdeckung entsprechend verformt bzw. zusammendrückt wird. Somit wird ein Teil der durch den Rundballen eingebrachten Energie abgefedert. Sobald der Rundballen das Ablageelement 70 verlassen hat wird die Kunststoffplatte durch die Entspannung der elastischen Schicht 80 wieder in die Ausgangslage bewegt. Bei Verwendung einer Folie als Abdeckung 82 muss diese entsprechend verformbar ausgebildet sein, so dass die durch die elastische Schicht 80 ausgeführten federnden Bewegungen nicht behindert werden.

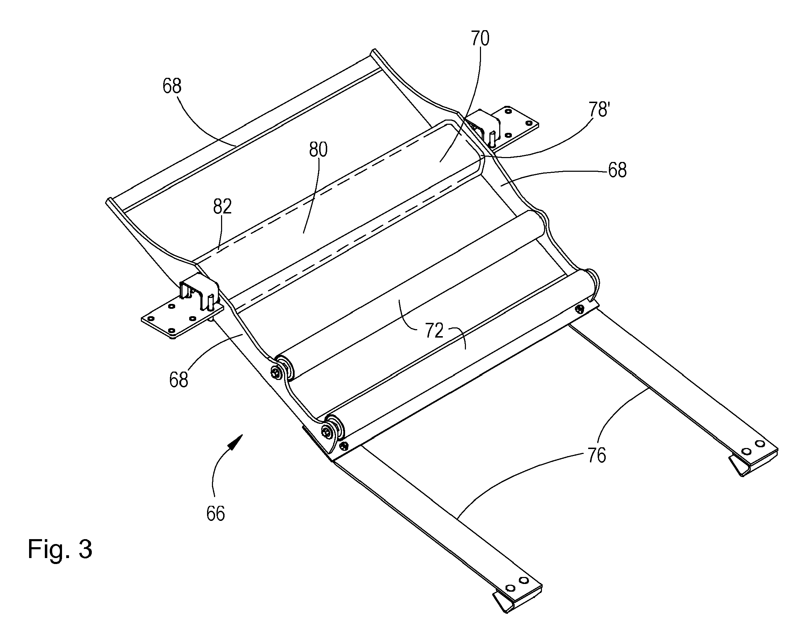

Figur 3 zeigt eine zweite Ausführungsform für das Ablageelement 70, welche der Ausführungsform aus Figur 2 entspricht, nur dass hier das Ablageelement 70 als Flachprofil 78' in Form eines dünnen Stahlblechs ausgebildet ist, so dass das Flachprofil 78' als dünnes Stahlblech selbst unter Einwirkung des Gewichts des Rundballens eine elastische Verformung vollzieht. Gleichzeitig ist das Ablageelement 70 bzw. das Flachprofil 78' jedoch stark genug ausgebildet, um dem Gewicht des Rundballens ohne plastische Verformung standzuhalten. Somit wird ein Teil der durch den Rundballen eingebrachten Energie abgefedert. Sobald der Rundballen das Ablageelement 70 verlassen hat nimmt das Flachprofil 78' wieder seine Ausgangsform an. An Stelle eines Stahlblechs kann auch eine Kunststoffplatte mit gleichen elastischen Eigenschaften verwendet werden.

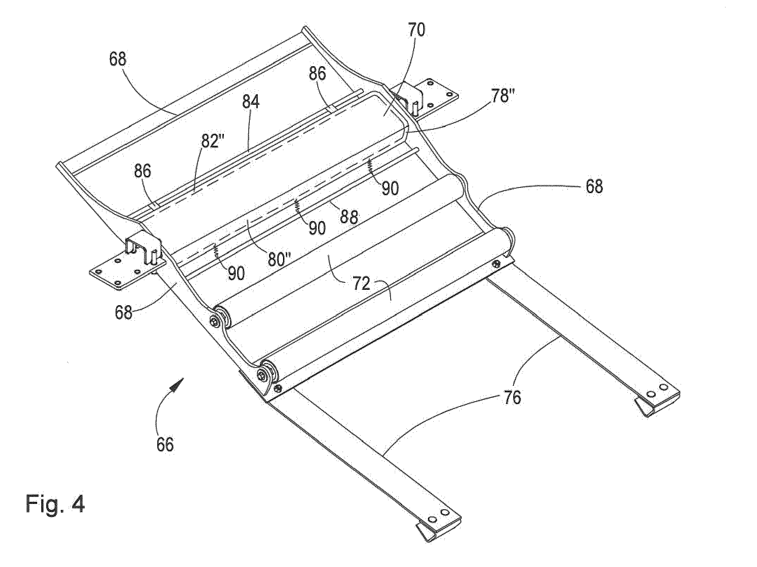

Figur 4 zeigt eine dritte Ausführungsform für das Ablageelement 70, welche im wesentlichen der Ausführungsform aus Figur 2 entspricht nur dass hier das als Flachprofil 78" ausgebildete Ablageelement 70 schwenkbar und gefedert aufgehängt ist. Dazu ist an dem Rampenrahmen 68 eine erste Befestigungsstrebe 84 befestigt, welche sich parallel zur Rotationsachse des Rundballens erstreckt und als Befestigung für das Ablageelement 70 dient. Das Ablageelement 70 ist mittels Schwenkgelenken 86, beispielsweise Scharnieren, an der Befestigungsstrebe 84 befestigt und lässt sich vertikal verschwenken. Eine zweite Befestigungsstrebe 88 erstreckt sich parallel zur ersten Befestigungsstrebe 84 auf der den Schwenkgelenken 86 entgegen gesetzten Seite des Ablageelements 70. Die zweite Befestigungsstrebe 88 ist an den Enden am Rampenrahmen 68 befestigt. Zwischen dem Ablageelement 70 und der zweiten Befestigungsstrebe 88 erstrecken sich Federelemente 90, beispielsweise Spiralfedern oder Schraubenfedern. Die Federelemente 90 bewirken eine Abfederung des Ablagelements 70, wenn dieses unter der Last des Rundballens beim Entladevorgang vertikal nach unten verschwenkt wird. Gleichzeitig wird dadurch auch der Schwenkwinkel begrenzt. Alternativ können auch Gummifedern oder andere elastische Elemente angeordnet sein, die eine Schwenkbewegung des Ablageelementes 70 abfedern. Unter Einwirkung des Gewichts des Rundballens wird das Ablageelement 70 bzw. das Flachprofil 78" vertikal nach unten verschwenkt, so dass die Federelemente 90 elastisch verformt bzw. zusammendrückt werden. Somit wird ein Teil der durch den Rundballen eingebrachten Energie abgefedert. Sobald der Rundballen das Ablageelement 70 verlassen hat wird das Ablageelement 70 durch die Entspannung der Federelemente 90 wieder in die Ausgangslage bewegt. Zusätzlich ist eine elastische Schicht 80" (hier nicht schraffiert dargestellt), wie auch beim Ausführungsbeispiel zu Figur 2, auf das Flachprofil 78" aufgebracht, um den Abfederungseffekt noch zu erhöhen. Eine entsprechende Abdeckung 82" zum Schutz der elastischen Schicht ist ebenfalls vorgesehen.

Den Ausführungsbeispielen gemäß den Figuren 1 bis 4 ist gemeinsam, dass eine mechanische Beanspruchung des Rundballens durch das Ablageelement (70) reduziert und dadurch Beschädigungen des Rundballens vorgebeugt wird, da an Stelle der üblichen Verwendung von Rollen als Ablagelement (70) hier als Ablageelement ein Flachprofil (78, 78', 78") verwendet wird, die gegenüber einer Rolle eine höhere Auflagefläche für den Rundballen bereitstellen kann, so dass gegenüber der Verwendung einer Rolle die Flächenpressung beim Aufprall des Rundballens entscheidend reduziert wird.

## Patentansprüche

1. Rundballenpresse (10) mit einem Rahmen (12), einem am Rahmen (12) ausgebildeten Pressraum (28) zur Bildung eines Rundballens, einem zwischen dem Pressraum (28) und einer Bodenfläche (74) ausgebildeten Entladebereich (32) und wenigstens einem im Entladebereich (32) angeordneten Ablageelement (70), welches sich parallel zur Rotationsachse des Rundballens erstreckt und zum Abstützen des Rundballens während eines Entladevorgangs dient, wobei das Ablageelement (70) als Flachprofil (78, 78', 78") ausgebildet und mit einer elastischen Schicht (80, 80") versehen ist, **dadurch gekennzeichnet, dass** die elastische Schicht (80, 80") wenigstens teilweise von einer Abdeckung (82, 82") umgeben ist..

2. Rundballenpresse (10) nach Anspruch 1, **dadurch gekennzeichnet, dass** sich das Ablageelement (70) wenigstens über einen Teil der Breite des Rundballens erstreckt.

3. Rundballenpresse (10) nach Anspruch 1 oder 2, **dadurch gekennzeichnet, dass** das Flachprofil (78') elastisch verformbar ausgebildet ist und sich unter Einwirkung des Rundballens beim Entladevorgang elastisch verformt.

4. Rundballenpresse (10) nach einem der Ansprüche 1 bis 3, **dadurch gekennzeichnet, dass** das Ablageelement (70) schwenkbar aufgehängt ist und eine Schwenkbewegung unter Einwirkung des Rundballens beim Entladevorgang eingeleitet wird, wobei das Ablageelement (70) mit die Schwenkbewegung abfedernden Mitteln (90) verbunden ist.

5. Rundballenpresse (10) nach einem der Ansprüche 1 bis 4, **dadurch gekennzeichnet, dass** die elastische Schicht (80, 80") aus einem Schaumstoff oder einem Elastomer gebildet wird.

## Claims

1. Round baler (10) having a frame (12), a pressing chamber (28) realized on the frame (12) for forming a round bale, an unloading area (32) realized between the pressing chamber (28) and a ground surface (74) and at least one depositing element (70) which is arranged in the unloading area (32) and which extends parallel to the rotational axis of the round bale and serves for supporting the round bale during an unloading operation, wherein the depositing element (70) is realized as a flat section (78, 78', 78") and is provided with a resilient layer (80, 80"), **characterized in that** the resilient layer (80, 80") is surrounded at least in part by a covering (82, 82").

2. Round baler (10) according to Claim 1, **characterized in that** the depositing element (70) extends at least over part of the width of the round bale.

3. Round baler (10) according to Claim 1 or 2, **characterized in that** the flat section (78') is realized so as to be resiliently deformable and deforms resiliently during the unloading operation under the influence of the round bale.

4. Round baler (10) according to one of Claims 1 to 3, **characterized in that** the depositing element (70) is suspended so as to be pivotable and a pivoting movement is introduced during the unloading operation under the influence of the round bale, wherein the depositing element (70) is connected to means (90) cushioning the pivoting movement.

5. Round baler (10) according to one of Claims 1 to 4, **characterized in that** the resilient layer (80, 80") is formed from a foam material or an elastomer.

## Revendications

1. Presse à balles rondes (10) comprenant un cadre (12), un espace de pressage (28) réalisé au niveau du cadre (12) pour former une balle ronde, une région de déchargement (32) réalisée entre l'espace de pressage (28) et une surface du sol (74) et au moins un élément de dépose (70) disposé dans la région de déchargement (32), lequel s'étend parallèlement à l'axe de rotation de la balle ronde et sert à supporter la balle ronde pendant une opération de déchargement, l'élément de dépose (70) étant réalisé sous forme de profilé plat (78, 78', 78") et étant pourvu d'une couche élastique (80, 80"), **caractérisée en ce que** la couche élastique (80, 80") est au moins en partie entourée par un revêtement (82, 82").

2. Presse à balles rondes (10) selon la revendication 1, **caractérisée en ce que** l'élément de dépose (70) s'étend au moins sur une partie de la largeur de la balle ronde.

3. Presse à balles rondes (10) selon la revendication 1 ou 2, **caractérisée en ce que** le profilé plat (78') est réalisé de manière élastiquement déformable et se déforme élastiquement sous l'action de la balle ronde lors de l'opération de déchargement.

4. Presse à balles rondes (10) selon l'une quelconque des revendications 1 à 3, **caractérisée en ce que** l'élément de dépose (70) est suspendu de manière pivotante et un mouvement de pivotement est amorcé lors de l'opération de déchargement sous l'action de la balle ronde, l'élément de dépose (70) étant connecté à des moyens (90) amortissant le mouvement d'oscillation.

5. Presse à balles rondes (10) selon l'une quelconque des revendications 1 à 4, **caractérisée en ce que** la couche élastique (80, 80") est formée d'une mousse ou d'un élastomère.
